(19) Europäisches Patentamt
European Patent Office
Office européen des brevets

(11) EP 4 726 982 A1

(12) **EUROPEAN PATENT APPLICATION**

(43) Date of publication:
15.04.2026 Bulletin 2026/16

(21) Application number: 24205719.8

(22) Date of filing: 10.10.2024

(51) International Patent Classification (IPC):
$H02M\ 1/00$ (2006.01) $\quad H02M\ 1/14$ (2006.01)
$H02M\ 1/32$ (2007.01) $\quad H02M\ 1/42$ (2007.01)
$H02M\ 1/44$ (2007.01) $\quad H02M\ 3/00$ (2006.01)
$H02M\ 3/335$ (2006.01) $\quad H02M\ 7/04$ (2006.01)

(52) Cooperative Patent Classification (CPC):
H02M 3/01; H02M 1/0009; H02M 1/007;
H02M 1/14; H02M 1/32; H02M 1/4233;
H02M 1/4241; H02M 1/4258; H02M 1/44;
H02M 3/33523; H02M 3/33571; H02M 7/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Tridonic GmbH & Co. KG
6851 Dornbirn (AT)

(72) Inventors:
• Schneider, Miguel Philipp
6851 Dornbirn (AT)
• Lochmann, Frank
6851 Dornbirn (AT)
• Romano, Fabio
6851 Dornbirn (AT)

(74) Representative: Rupp, Christian
Mitscherlich PartmbB
Karlstraße 7
80333 München (DE)

(54) **RESONANT HYBRID FLYBACK CONVERTER, CORRESPONDING USE, LED DRIVER, AND LUMINAIRE**

(57) A resonant hybrid flyback converter (10) comprises a flyback resonant tank (11) comprising a transformer comprising a primary side, and a secondary side with an output capacitance (12) for supplying a load, a half-bridge (13) comprising a high-side switch, and a low-side switch, said half-bridge configured to supply the primary side, and a controller (14). In this context, the controller (14) is configured to control an on-time of the high-side switch and/or an on-time of the low-side switch, preferably such that said on-time of the high-side switch and/or said on-time of the low-side switch is set before the high-side switch and/or the low-side switch is switched. Additionally or alternatively, the output capacitance (12) is configured such that a corresponding output capacitance value is so low that a THD, especially a current THD, of the resonant hybrid flyback converter (10) is lower than 5 per cent, preferably lower than 3 per cent, more preferably lower than 1 per cent, most preferably lower than 0.5 per cent.

Fig. 3

**Description**

The invention relates to a resonant hybrid flyback converter, an alternative resonant hybrid flyback converter, a use of a resonant hybrid flyback converter, an LED driver with a resonant hybrid flyback converter, and a luminaire with such an LED driver and an LED load.

Generally, in times of an increasing number of LEDs especially used for lighting applications, there is a growing need of power supplies allowing for a particularly efficient and reliable supply of such LEDs.

Typically, different known power supply topologies lead to several disadvantages such as reduced efficiency, high inrush current, lack of isolation, or any combination thereof.

Accordingly, there is the object to provide a resonant hybrid flyback converter, an alternative resonant hybrid flyback converter, a use of a resonant hybrid flyback converter, an LED driver with a resonant hybrid flyback converter, and a luminaire with such an LED driver and an LED load, thereby ensuring a particularly high efficiency, a low inrush current, and isolation.

This object is solved by the features of the first independent claim for a resonant hybrid flyback converter, the features of the second independent claim for an alternative resonant hybrid flyback converter, the features of the third independent claim for a use of a resonant hybrid flyback converter, the features of the fourth independent claim for an LED driver with a resonant hybrid flyback converter, and the features of the fifth independent claim for a luminaire with such an LED driver and an LED load. The dependent claims contain further developments. Accordingly, the invention is described by the appended set of claims.

According to a first aspect of the invention, a resonant hybrid flyback converter is provided. Said resonant hybrid flyback converter comprises a flyback resonant tank comprising a transformer comprising a primary side, and a secondary side with an output capacitance for supplying a load, a half-bridge comprising a high-side switch, and a low-side switch, said half-bridge configured to supply the primary side, and a controller. In this context, the controller is configured to control an on-time of the high-side switch and/or an on-time of the low-side switch, preferably such that said on-time of the high-side switch and/or said on-time of the low-side switch is set before the high-side switch and/or the low-side switch is switched. In addition to this or as an alternative, the output capacitance is configured such that a corresponding output capacitance value is so low that a THD, especially a current THD, of the resonant hybrid flyback converter is lower than 5 per cent, preferably lower than 3 per cent, more preferably lower than 1 per cent, most preferably lower than 0.5 per cent.

Advantageously, a particularly high efficiency, a low inrush current, and isolation can be ensured. With respect to the implementation forms of the first aspect of the invention as described below, it is noted that in the context of said implementation forms, at least one of or a combination of said efficiency, inrush current, and isolation can further be improved.

With respect to the first aspect of the invention, especially in the context of the above-mentioned advantages, it is noted that it might be particularly advantageous if the controller is configured to control an on-time of the high-side switch and/or an on-time of the low-side switch, preferably such that said on-time of the high-side switch and/or said on-time of the low-side switch is set before the high-side switch and/or the low-side switch is switched, and the output capacitance is configured such that a corresponding output capacitance value is so low that a THD, especially a current THD, of the resonant hybrid flyback converter is lower than 5 per cent, preferably lower than 3 per cent, more preferably lower than 1 per cent, most preferably lower than 0.5 per cent.

According to a second aspect of the invention, a resonant hybrid flyback converter is provided. Said resonant hybrid flyback converter comprises a flyback resonant tank comprising a transformer comprising a primary side, and a secondary side with an output capacitance for supplying a load, a half-bridge comprising a high-side switch, and a low-side switch, said half-bridge configured to supply the primary side, and a controller. In this context, the controller is configured to control an on-time of the high-side switch and/or an on-time of the low-side switch, preferably such that said on-time of the high-side switch and/or said on-time of the low-side switch is set before the high-side switch and/or the low-side switch is switched. In addition to this or as an alternative, the output capacitance is configured such that a corresponding output capacitance value is based on a corresponding period value of mains supplying the resonant hybrid flyback converter and/or a corresponding resistance value of the load. Advantageously, a particularly high efficiency, a low inrush current, and isolation can be ensured. With respect to the implementation forms of the second aspect of the invention as described below, it is noted that in the context of said implementation forms, at least one of or a combination of said efficiency, inrush current, and isolation can further be improved.

With respect to the second aspect of the invention, especially in the context of the above-mentioned advantages, it is noted that it might be particularly advantageous if the controller is configured to control an on-time of the high-side switch and/or an on-time of the low-side switch, preferably such that said on-time of the high-side switch and/or said on-time of the low-side switch is set before the high-side switch and/or the low-side switch is switched, and the output capacitance is configured such that a corresponding output capacitance value is based on a corresponding period value of mains supplying the resonant hybrid flyback converter and/or a corresponding resistance value of the load.

According to an implementation form of the first aspect of the invention or of the second aspect of the invention, respectively, the output capacitance is configured such that within one corresponding period of mains supplying the resonant hybrid flyback converter, a corresponding output voltage at the output capacitance drops to 50 per cent or less, preferably to 25 per cent or less, more preferably to 10 per cent or less, most preferably to 1 per cent or less or 0 per cent, of a corresponding nominal output voltage. According to a further implementation form of the first aspect of the invention or of the second aspect of the invention, respectively, the corresponding output voltage at the output capacitance drops to 50 per cent or less, preferably to 25 per cent or less, more preferably to 10 per cent or less, most preferably to 1 per cent or less or 0 per cent, of the corresponding nominal output voltage at a quarter of the corresponding period of mains supplying the resonant hybrid flyback converter.

According to a further implementation form of the first aspect of the invention or of the second aspect of the invention, respectively, the output capacitance is configured such that the following formula applies to the corresponding output capacitance value:

$$C < \frac{T_{mains}}{8 \cdot R}$$ . In this context, C denotes the corresponding output capacitance value, $T_{mains}$ denotes the corresponding period value of mains supplying the resonant hybrid flyback converter, and R denotes the corresponding resistance value of the load.

According to a further implementation form of the first aspect of the invention or of the second aspect of the invention, respectively, the corresponding output capacitance value is 10 microfarad or less, preferably 1 microfarad or less, more preferably 0.5 microfarad or less, most preferably 0.1 microfarad or less.

According to a further implementation form of the first aspect of the invention or of the second aspect of the invention, respectively, the resonant hybrid flyback converter is configured to operate as a PFC.

According to a third aspect of the invention, a use of a resonant hybrid flyback converter comprising a low output capacitance for supplying a load, especially a resonant hybrid flyback converter according to the first aspect of the invention or the second aspect of the invention or any of their implementation forms, respectively, as a PFC is provided.

Advantageously, a particularly high efficiency, a low inrush current, and isolation can be ensured. With respect to the implementation forms of the third aspect of the invention as described below, it is noted that in the context of said implementation forms, at least one of or a combination of said efficiency, inrush current, and isolation can further be improved.

According to an implementation form of the third aspect of the invention, the output capacitance is configured such that the following formula applies to a corresponding output capacitance value: $$C < \frac{T_{mains}}{8 \cdot R}$$ . In this context, C denotes the corresponding output ca-

pacitance value, $T_{mains}$ denotes a corresponding period value of mains supplying the resonant hybrid flyback converter, and R denotes a corresponding resistance value of the load.

According to a further implementation form of the third aspect of the invention, the corresponding output capacitance value is 10 microfarad or less, preferably 1 microfarad or less, more preferably 0.5 microfarad or less, most preferably 0.1 microfarad or less.

According to a fourth aspect of the invention, an LED driver for supplying an LED load is provided. Said LED driver comprises a resonant hybrid flyback converter comprising a low output capacitance for supplying said LED load, especially a resonant hybrid flyback converter according to the first aspect of the invention or the second aspect of the invention or any of their implementation forms, respectively.

Advantageously, a particularly high efficiency, a low inrush current, and isolation can be ensured. With respect to the implementation forms of the fourth aspect of the invention as described below, it is noted that in the context of said implementation forms, at least one of or a combination of said efficiency, inrush current, and isolation can further be improved.

According to an implementation form of the fourth aspect of the invention, the output capacitance is configured such that the following formula applies to a corresponding output capacitance value:

$$C < \frac{T_{mains}}{8 \cdot R}$$ . In this context, C denotes the corresponding output capacitance value, $T_{mains}$ denotes a corresponding period value of mains supplying the resonant hybrid flyback converter, and R denotes a corresponding resistance value of the load.

According to a further implementation form of the fourth aspect of the invention, the corresponding output capacitance value is 10 microfarad or less, preferably 1 microfarad or less, more preferably 0.5 microfarad or less, most preferably 0.1 microfarad or less.

According to a further implementation form of the fourth aspect of the invention, the resonant hybrid flyback converter is configured to operate as a PFC.

According to a fifth aspect of the invention, a luminaire is provided. Said luminaire comprises an LED driver according to the fourth aspect of the invention or any of its implementation forms, respectively, and an LED load supplied by said LED driver.

Advantageously, a particularly high efficiency, a low inrush current, and isolation can be ensured.

Exemplary embodiments of the invention are now further explained with respect to the drawings by way of example only, and not for limitation. In the drawings:

Fig. 1 shows an exemplary embodiment of a resonant hybrid flyback converter;

Fig. 2 shows an exemplary embodiment of an LED driver and a luminaire; and

Fig. 3      shows an exemplary embodiment of resonant hybrid flyback converter exemplarily operating as a PFC or a PFC stage, respectively.

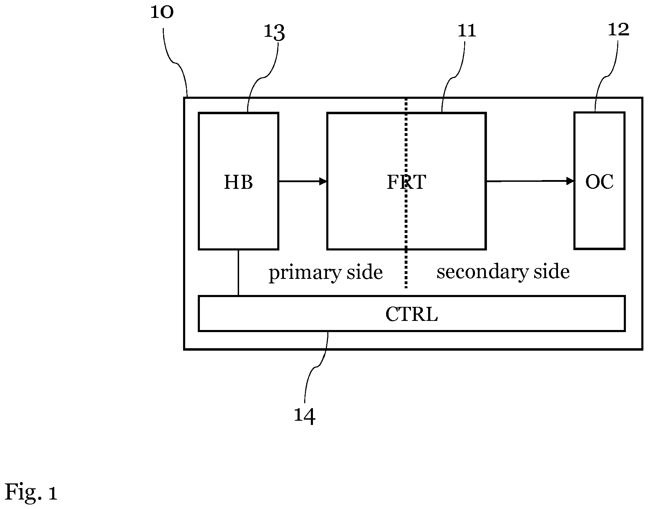

With respect to Fig. 1, an exemplary embodiment of a resonant hybrid flyback converter 10 is illustrated. Said resonant hybrid flyback converter 10 comprises a flyback resonant tank 11 comprising a transformer comprising a primary side, and a secondary side with an output capacitance 12 for supplying a load, a half-bridge 13 comprising a high-side switch, and a low-side switch, said half-bridge 13 configured to supply the primary side, and a controller 14.

According to a first alternative configuration, the controller 14 is configured to control an on-time of the high-side switch and/or an on-time of the low-side switch, preferably such that said on-time of the high-side switch and/or said on-time of the low-side switch is set before the high-side switch and/or the low-side switch is switched, and/or, preferably and, the output capacitance 12 is configured such that a corresponding output capacitance value is so low that a THD (total harmonic distortion), especially a current THD, of the resonant hybrid flyback converter is lower than 5 per cent, preferably lower than 3 per cent, more preferably lower than 1 per cent, most preferably lower than 0.5 per cent.

It is noted that it might be particularly advantageous if the on-time of the high-side switch and/or the on-time of the low-side switch is controlled with waiver of a peak control or with waiver of a switch-off threshold for the corresponding flyback switch, respectively.

Furthermore, it might be particularly advantageous if the controller 14 is configured to control the on-time of the high-side switch, preferably such that said on-time of the high-side switch is set before the high-side switch is switched. Additionally or alternatively, the controller 14 may be configured to operate the low-side switch in a constant on-time mode. Further additionally or further alternatively, the controller 14 may be configured to adjust the low-side switch or the on-time of the low-side switch depending on the load.

In accordance with a second alternative configuration, the controller 14 is configured to control an on-time of the high-side switch and/or an on-time of the low-side switch, preferably such that said on-time of the high-side switch and/or said on-time of the low-side switch is set before the high-side switch and/or the low-side switch is switched, and/or, preferably and, the output capacitance 12 is configured such that a corresponding output capacitance value is based on a corresponding period value of mains supplying the resonant hybrid flyback converter 10 and/or a corresponding resistance value of the load.

It is noted that it might be particularly advantageous if the on-time of the high-side switch and/or the on-time of the low-side switch is controlled with waiver of a peak control or with waiver of a switch-off threshold for the corresponding flyback switch, respectively.

Moreover, it might be particularly advantageous if the controller 14 is configured to control the on-time of the high-side switch, preferably such that said on-time of the high-side switch is set before the high-side switch is switched. Additionally or alternatively, the controller 14 may be configured to operate the low-side switch in a constant on-time mode. Further additionally or further alternatively, the controller 14 may be configured to adjust the low-side switch or the on-time of the low-side switch depending on the load.

For the sake of completeness, it is noted that the following explanations can apply for both the above-mentioned first alternative configuration and said second alternative configuration.

Especially for the case that said mains is based on an alternating voltage, a rectifier can be provided for rectifying said alternating voltage before supplying the half-bridge 13 of the resonant hybrid flyback converter 10. It is noted that the resonant hybrid flyback converter 10 can comprise a rectifier for supplying the half-bridge 13 of the resonant hybrid flyback converter 10. It might be particularly advantageous if the resonant hybrid flyback converter 10 is implemented as an AC/DC stage.

It is noted that it might be particularly advantageous if the output capacitance 12 is configured such that within one corresponding period of mains supplying the resonant hybrid flyback converter 10, a corresponding output voltage at the output capacitance drops to 50 per cent or less, preferably to 25 per cent or less, more preferably to 10 per cent or less, most preferably to 1 per cent or less or 0 per cent, of a corresponding nominal output voltage.

In this context, it might be particularly advantageous if the corresponding output voltage at the output capacitance 12 drops to 50 per cent or less, preferably to 25 per cent or less, more preferably to 10 per cent or less, most preferably to 1 per cent or less or 0 per cent, of the corresponding nominal output voltage at a quarter of the corresponding period of mains supplying the resonant hybrid flyback converter 10.

Furthermore, with respect to the output capacitance 12, it is noted that it might be particularly advantageous if the output capacitance 12 is configured such that the following formula applies to the corresponding output capacitance value: $C < \frac{T_{mains}}{8 \cdot R}$ . In this context, C denotes the corresponding output capacitance value, $T_{mains}$ denotes the corresponding period value of mains supplying the resonant hybrid flyback converter 10, and R denotes the corresponding resistance value of the load.

Specifically, it might be particularly advantageous if the corresponding output capacitance value is 10 microfarad or less, preferably 1 microfarad or less, more preferably 0.5 microfarad or less, most preferably 0.1 microfarad or less.

Moreover, it is noted that it might be particularly advantageous if the resonant hybrid flyback converter 10 is configured to operate as a PFC (power factor correction) or as a PFC stage, respectively.

In this context, it might be particularly advantageous if the resonant hybrid flyback converter 10 comprises a rectifier, such as the above-mentioned rectifier, for supplying the half-bridge 13. Accordingly, the resonant hybrid flyback converter 10 may be an AC/DC stage.

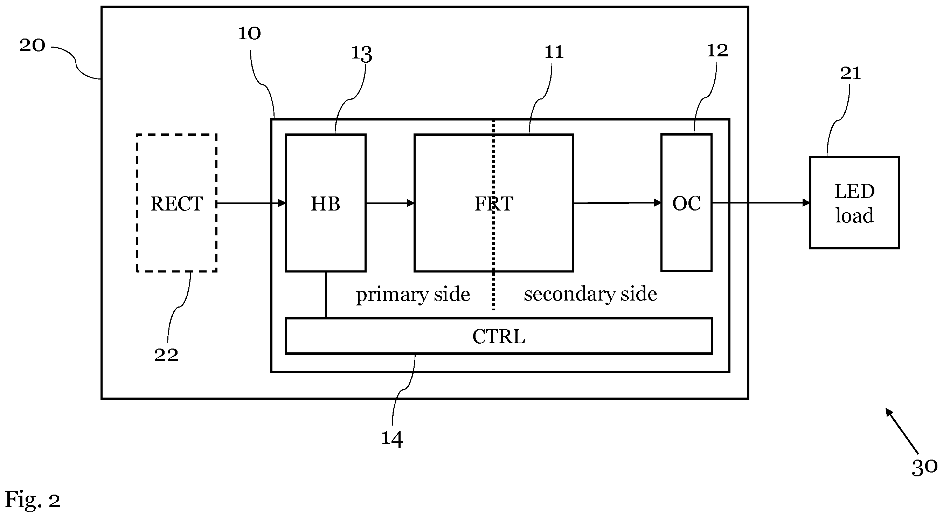

Furthermore, Fig. 2 depicts an exemplary embodiment of an LED driver 20 for supplying an LED load 21. For the sake of completeness, it is noted that said Fig. 2 also shows an exemplary embodiment of a luminaire 30 comprising said LED driver 20 and said LED load 21.

Exemplarily, in accordance with Fig. 2, the LED driver 20 the resonant hybrid flyback converter 10 according to Fig. 1. It is noted that said resonant hybrid flyback converter 10 could be replaced by a resonant hybrid flyback converter comprising a low output capacitance for supplying the LED load 21.

By analogy with the explanations above, it might be particularly advantageous if said output capacitance is configured such that the following formula applies to a corresponding output capacitance value:

$$C < \frac{T_{mains}}{8 \cdot R}$$

. In this context, C denotes the corresponding output capacitance value, $T_{mains}$ denotes a corresponding period value of mains supplying the resonant hybrid flyback converter, and R denotes a corresponding resistance value of the LED load 21.

Specifically, it might be particularly advantageous if the corresponding output capacitance value is 10 microfarad or less, preferably 1 microfarad or less, more preferably 0.5 microfarad or less, most preferably 0.1 microfarad or less.

As it can further be seen from Fig. 2, especially for the case that mains supplying the LED driver 20 is based on an alternating voltage, the LED driver 20 may comprise a rectifier 22, such as the rectifier as described in the context of Fig. 1 above, for supplying the resonant hybrid flyback converter 10 or the half-bridge 13 of the resonant hybrid flyback converter 10, respectively.

Again, as already indicated above, it is noted that it might be particularly advantageous if the resonant hybrid flyback converter 10 is configured to operate as a PFC or as a PFC stage, respectively.

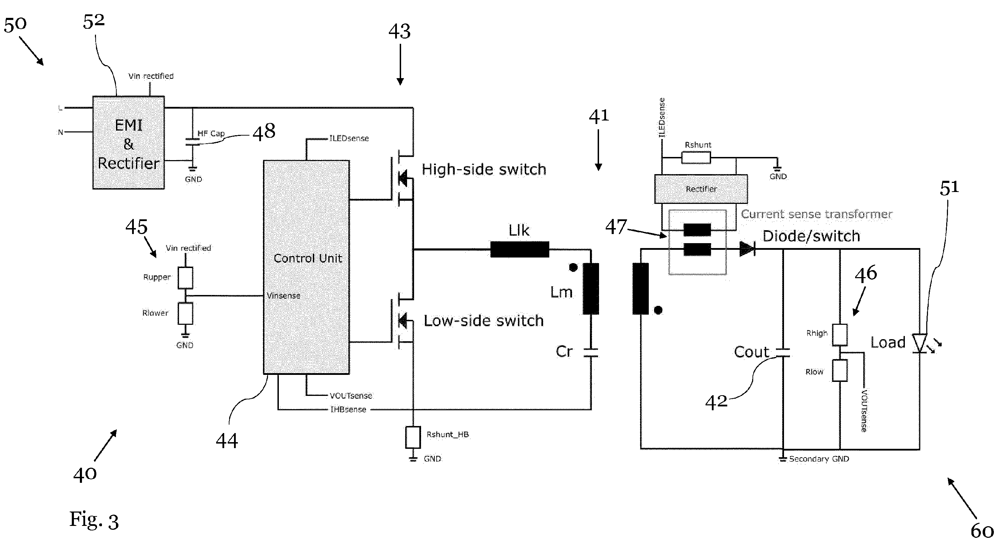

Finally, Fig. 3 illustrates an exemplary embodiment of a resonant hybrid flyback converter exemplarily operating as a PFC or a PFC stage, respectively.

In this context, it is noted that elements and parts shown in Fig. 3, which are equivalent to elements and parts shown in Fig. 1 or Fig. 2, respectively, are denoted with reference signs differing by the number of 30 from the corresponding reference signs used in Fig. 1 or Fig. 2, respectively.

Accordingly, the explanations above regarding the elements 10, 11, 12, 13, 14, 20, 21, 22, and 30 can analogously apply for the elements 40, 41, 42, 43, 44, 50, 51, 52, and 60, and vice versa.

For the sake of completeness, as indicated above, it is further noted that Fig. 3 additionally illustrates not only an LED driver 50 for supplying an LED load 51, but also a luminaire 60 comprising said LED driver 50 and said LED load supplied by the LED driver 50.

As it can be seen from said Fig. 3, the controller or control unit 44, respectively, can be configured to sense an input voltage, especially a rectified input voltage, of the resonant hybrid flyback converter 40 or the half-bridge 43 of the resonant hybrid flyback converter 40, respectively, preferably with the aid of a voltage divider 45.

As indicated by Fig. 3, with respect to the above-mentioned rectifier 22 of Fig. 2, the rectifier 52 can further comprise an electromagnetic interference filter.

Again, with respect to the controller or control unit 44, respectively, of Fig. 3, it is noted that the control unit 44 can be configured to sense an output voltage of the resonant hybrid flyback converter 40, especially via a corresponding potential barrier, exemplarily through an optocoupler or a transformer, preferably with the aid of a voltage divider or a further voltage divider 46, respectively.

Moreover, as it can further be seen from Fig. 3, the controller or the control unit 44, respectively, can be configured to sense an output current of the resonant hybrid flyback converter 40, preferably with the aid of a current measuring transformer 47.

Furthermore, also in accordance with said Fig. 3, the controller or the control unit 44, respectively, can be configured to sense and/or monitor the low-side switch of the half-bridge 43, preferably as a control parameter and/or as a protective function, especially for overcurrent shutdown.

It might be particularly advantageous if the controller or the control unit 44, respectively, is configured to control the resonant hybrid flyback converter 40 and/or the on-time of the high-side switch and/or the on-time of the low-side switch based on the sensed input voltage, especially the sensed rectified input voltage, of the resonant hybrid flyback converter 40 or the half-bridge 43 of the resonant hybrid flyback converter 40, respectively, and/or the sensed output voltage of the resonant hybrid flyback converter 40 and/or the sensed output current of the resonant hybrid flyback converter 40 and/or the sensed and/or monitored low-side switch of the half-bridge 43.

With respect to the output capacitance or the output capacitor 42, respectively, it is noted that it might be particularly advantageous if, especially for the case of a mains voltage of 230 V AC, said output capacitance or output capacitor 42, respectively, is dimensioned such that the corresponding voltage at the radio frequency, RF, capacitor 48 drops to at least 100 V, preferably 50 V, more preferably 10 V, most preferably 5 V or 0 V, within one mains period. Advantageously, the corresponding THD can further be improved.

As it can be seen from Fig. 3, said RF capacitor 48 is connected in parallel to the input voltage, especially the rectified input voltage, of the resonant hybrid flyback converter 40 or the half-bridge 43 of the resonant hybrid flyback converter 40, respectively.

Furthermore, it might be particularly advantageous if within one mains period, the corresponding voltage at the output capacitance or output capacitor 42, respectively, drops to at least 50 per cent, preferably 25 per cent, more preferably 10 per cent, most preferably 3 per cent or 0 per cent, of the corresponding nominal output voltage.

Moreover, it might be particularly advantageous if the output capacitance or the output capacitor 42, respectively, is dimensioned such that, especially under a defined load, the corresponding voltage at the output capacitor 42 drops to at least 50 per cent, preferably 25 per cent, more preferably 10 per cent, most preferably 3 per cent or 0 per cent, of the corresponding nominal output voltage within one mains period, especially within one quarter of the mains period.

With respect to said defined load, it is noted that the defined load may be implemented with the aid of a resistive load or a downstream DC-DC converter, especially a boost converter. Accordingly, the LED driver 50 may comprise the resonant hybrid flyback converter 40 and such a DC-DC converter or such a boost converter, respectively.

Especially in the case of said resistive load, it might be particularly advantageous if the output capacitance or the output capacitor 42, respectively, is configured such that the following formula applies to the corresponding output capacitance value:

$$C < \frac{T_{mains}}{8 \cdot R} \quad ,$$

wherein C denotes the corresponding output capacitance value,

wherein $T_{mains}$ denotes the corresponding period value of mains supplying the resonant hybrid flyback converter 40, and

wherein R denotes the corresponding resistance value of the load.

Especially in the case of said DC-DC converter or said boost converter, respectively, it might be particularly advantageous if a corresponding switch-on time is used as a control variable.

Also especially in the case of said DC-DC converter or said boost converter, respectively, it might be particularly advantageous if the output capacitance or the output capacitor 42, respectively, is configured such that the following formula applies to the corresponding output capacitance value:

$$C < \frac{T_{mains}}{8 \cdot L} \cdot \frac{T_{on}^2}{T_{on} + T_{off}} \quad ,$$

wherein C denotes the corresponding output capacitance value,

wherein $T_{mains}$ denotes the corresponding period value of mains supplying the resonant hybrid flyback converter 40, wherein L denotes the corresponding boost inductance, wherein $T_{on}$ denotes the corresponding switch-on time of the converter, and wherein $T_{off}$ denotes the corresponding switch-off time of the converter.

Especially in the case of using the corresponding switch-on time as a control variable, it might be particularly advantageous if the following formula applies to the corresponding switch-on time of the converter:

$$T_{on} > \sqrt{\frac{8 \cdot L \cdot C \cdot (T_{on} + T_{off})}{T_{mains}}} \quad .$$

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. A resonant hybrid flyback converter (10, 40), comprising:

   a flyback resonant tank (11, 41) comprising a transformer comprising a primary side, and a secondary side with an output capacitance (12, 42) for supplying a load,
   a half-bridge (13, 43) comprising a high-side switch, and a low-side switch, said half-bridge (13, 43) configured to supply the primary side, and
a controller (14),
wherein the controller (14, 44) is configured to control an on-time of the high-side switch and/or an on-time of the low-side switch, preferably such that said on-time of the high-side switch and/or said on-time of the low-side switch is set before the high-side switch and/or the low-side switch is switched, and/or
wherein the output capacitance (12, 42) is configured such that a corresponding output capacitance value is so low that a THD, especially a current THD, of the resonant hybrid flyback converter (10, 40) is lower than 5 per cent, preferably lower than 3 per cent, more preferably lower than 1 per cent, most preferably lower than 0.5 per cent.

2. A resonant hybrid flyback converter (10, 40), comprising:

   a flyback resonant tank (11, 41) comprising a transformer comprising a primary side, and a secondary side with an output capacitance (12, 42) for supplying a load,
   a half-bridge (13, 43) comprising a high-side switch, and a low-side switch, said half-bridge (13, 43) configured to supply the primary side, and
   a controller (14, 44),
   wherein the controller (14, 44) is configured to control an on-time of the high-side switch and/or an on-time of the low-side switch, preferably such that said on-time of the high-side switch and/or said on-time of the low-side switch is set before the high-side switch and/or the low-side switch is switched, and/or
   wherein the output capacitance (12, 42) is configured such that a corresponding output capacitance value is based on a corresponding period value of mains supplying the resonant hybrid flyback converter (10, 40) and/or a corresponding resistance value of the load.

3. The resonant hybrid flyback converter (10, 40) according to claim 1 or 2,
   wherein the output capacitance (12, 42) is configured such that within one corresponding period of mains supplying the resonant hybrid flyback converter (10, 40), a corresponding output voltage at the output capacitance (12, 42) drops to 50 per cent or less, preferably to 25 per cent or less, more preferably to 10 per cent or less, most preferably to 1 per cent or less or 0 per cent, of a corresponding nominal output voltage.

4. The resonant hybrid flyback converter (10, 40) according to claim 3,

wherein the corresponding output voltage at the output capacitance (12, 42) drops to 50 per cent or less, preferably to 25 per cent or less, more preferably to 10 per cent or less, most preferably to 1 per cent or less or 0 per cent, of the corresponding nominal output voltage at a quarter of the corresponding period of mains supplying the resonant hybrid flyback converter (10, 40).

5. The resonant hybrid flyback converter (10, 40) according to any of the claims 1 to 4,

   wherein the output capacitance (12, 42) is configured such that the following formula applies to the corresponding output capacitance value:

   $$C < \frac{T_{mains}}{8 \cdot R} \quad,$$

   wherein C denotes the corresponding output capacitance value,
   wherein $T_{mains}$ denotes the corresponding period value of mains supplying the resonant hybrid flyback converter (10, 40), and
   wherein R denotes the corresponding resistance value of the load.

6. The resonant hybrid flyback converter (10, 40) according to any of the claims 1 to 5,
   wherein the corresponding output capacitance value is 10 microfarad or less, preferably 1 microfarad or less, more preferably 0.5 microfarad or less, most preferably 0.1 microfarad or less.

7. The resonant hybrid flyback converter (10, 40) according to any of the claims 1 to 6,
   wherein the resonant hybrid flyback converter (10, 40) is configured to operate as a PFC.

8. A use of a resonant hybrid flyback converter comprising a low output capacitance for supplying a load, especially a resonant hybrid flyback converter (10, 40) according to any of the claims 1 to 7, as a PFC.

9. The use according to claim 8,

   wherein the output capacitance is configured such that the following formula applies to a corresponding output capacitance value:

   $$C < \frac{T_{mains}}{8 \cdot R} \quad,$$

   wherein C denotes the corresponding output capacitance value,
   wherein $T_{mains}$ denotes a corresponding period value of mains supplying the resonant hybrid flyback converter, and

wherein $R$ denotes a corresponding resistance value of the load.

10. The use according to claim 8 or 9, wherein the corresponding output capacitance value is 10 microfarad or less, preferably 1 microfarad or less, more preferably 0.5 microfarad or less, most preferably 0.1 microfarad or less.

11. An LED driver (20, 50) for supplying an LED load (21, 51), comprising a resonant hybrid flyback converter comprising a low output capacitance for supplying said LED load (21, 51), especially a resonant hybrid flyback converter (10, 40) according to any of the claims 1 to 7.

12. The LED driver (20, 50) according to claim 11, wherein the output capacitance is configured such that the following formula applies to a corresponding output capacitance value:

$$C < \frac{T_{mains}}{8 \cdot R} \quad,$$

wherein $C$ denotes the corresponding output capacitance value,
wherein $T_{mains}$ denotes a corresponding period value of mains supplying the resonant hybrid flyback converter, and
wherein $R$ denotes a corresponding resistance value of the LED load.

13. The LED driver (20, 50) according to claim 11 or 12, wherein the corresponding output capacitance value is 10 microfarad or less, preferably 1 microfarad or less, more preferably 0.5 microfarad or less, most preferably 0.1 microfarad or less.

14. The LED driver (20, 50) according to any of the claims 11 to 13, wherein the resonant hybrid flyback converter is configured to operate as a PFC.

15. A luminaire (30, 60), comprising:

an LED driver (20, 50) according to any of the claims 11 to 14, and
an LED load (21, 51) supplied by said LED driver (20).

Fig. 1

Fig. 2

EP 4 726 982 A1

Fig. 3

Europäisches
Patentamt

European
Patent Office

Office européen
des brevets

# EUROPEAN SEARCH REPORT

**Application Number**

EP 24 20 5719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 437 178 B1 (SIGNIFY HOLDING BV [NL]) 18 August 2021 (2021-08-18) | 1-4,6-8, 10,11, 13-15 | INV. H02M1/00 H02M1/14 |
| A | * abstract * * paragraphs [0029], [0107], [0121] - [0128], [0135], [0136]; figures 1-12 * ----- | 5,9,12 | H02M1/32 H02M1/42 H02M1/44 H02M3/00 H02M3/335 H02M7/04 |

**TECHNICAL FIELDS SEARCHED (IPC)**

H02M

The present search report has been drawn up for all claims

| Place of search | Date of completion of the search | Examiner |
|---|---|---|
| The Hague | 27 February 2025 | Van der Meer, Paul |

EPO FORM 1503 03.82 (P04C01)

## ANNEX TO THE EUROPEAN SEARCH REPORT
## ON EUROPEAN PATENT APPLICATION NO.

EP 24 20 5719

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | | Publication date | Patent family member(s) | | Publication date |
|---|---|---|---|---|---|
| EP 3437178 | B1 | 18-08-2021 | CN | 109247042 A | 18-01-2019 |
| | | | EP | 3437178 A1 | 06-02-2019 |
| | | | US | 2019058393 A1 | 21-02-2019 |
| | | | WO | 2017167640 A1 | 05-10-2017 |

EPO FORM P0459

For more details about this annex : see Official Journal of the European Patent Office, No. 12/82